(19) Europäisches Patentamt

European Patent Office

Office européen des brevets

(11) Veröffentlichungsnummer : **0 105 951 B1**

## (12) EUROPÄISCHE PATENTSCHRIFT

(45) Veröffentlichungstag der Patentschrift :
10.09.86

(21) Anmeldenummer : 82109422.4

(22) Anmeldetag : 12.10.82

(51) Int. Cl.⁴ : **F 21 S   5/00**, F 21 V 29/00,
G 02 B   6/24

(54) **Lichtprojektor mit Anschlussbuchse für den Stecker eines Fiberlichtleitkabels.**

(43) Veröffentlichungstag der Anmeldung :
25.04.84 Patentblatt 84/17

(45) Bekanntmachung des Hinweises auf die Patenterteilung : 10.09.86 Patentblatt 86/37

(84) Benannte Vertragsstaaten :
CH DE FR GB LI

(56) Entgegenhaltungen :
EP-A- 0 027 608
DE-A- 1 928 360
DE-A- 2 741 714
DE-B- 2 741 715
FR-A-   750 996
GB-A- 1 498 275
US-A- 4 232 934

(73) Patentinhaber : **Richard Wolf GmbH**
**Pforzheimer Strasse 24**
**D-7134 Knittlingen (DE)**

(72) Erfinder : **Blanc, Ernst**
**Aillandstrasse 2**
**D-7519 Oberderdingen Gross-Villars (DE)**

(74) Vertreter : **Wilcken, Hugo, Dr. et al**
**Patentanwälte Dr. Hugo Wilcken Dipl.-Ing. Thomas**
**Wilcken Musterbahn 1**
**D-2400 Lübeck (DE)**

EP 0 105 951 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf einen Lichtprojektor mit einer Anschlußbuchse für einen in sie einführbaren Stecker eines Fiberlichtleitkabels, dessen proximales Steckerende im Durchmesser verringert und von einem Wärmeableiter umgeben ist. Für Endoskope werden Lichtleitfibern proximal zum Anschluß an einen Lichtprojektor zu einem Stecker zusammengefaßt und in bekannter Weise durch einen Glaskitt unlösbar miteinander verbunden. Der Anschluß des Steckers eines solchen Fiberlichtleitkabels an ein Gehäuse eines Lichtprojektors erfolgt durch das Einführen des Steckers in eine Anschlußbuchse des Projektorgehäuses, US-A-4 232 934 und EP-A-00 27 608. Wenn der fokussierte Lichtstrahl des Lichtprojektors in die Stirnfläche des Fiberlichtleitkabels eingestrahlt wird, so führt dies insbesondere bei Verwendung von Hochleistungs-Lichtprojektoren zu einer erheblichen Erwärmung des Steckerteiles. Wenn nun Fiberlichtleitkabel mittleren und größeren Querschnitts verwendet werden, so führt die Lichteinstrahlung wegen der geringen radial nach außen gerichteten Wärmeableitung der Glasfibern zu einem sehr schnellen Temperaturanstieg des Steckers, und dies führt wegen der hohen Wärmeabsorption des Glaskittes durch UV-Strahlen des Lichts dazu, daß der Glaskitt verflüssigt wird und aus einzelnen Fiberzwischenräumen mit anschließender Verbrennung Schwarzfärbung der Fibern austritt, was schließlich zur Zerstörung des Steckers führt.

In der DE-A-1 928 360 ist schon vorgeschlagen worden, die Hitze des im Durchmesser gegenüber dem der sonstigen Lichtleitkabellänge verringerten Steckers zu vermeiden, indem man den Stecker in eine Bohrung eines Aluminiumblockes mit äußeren Kühlrippen einführt, in welchem die Lichtquelle gelagert ist, die ihr Licht in die Stirnfläche des Steckers einstrahlt. Es ist dadurch möglich, einen Teil der sich im Stekker entwickelnden Wärme durch diese Kühlung abzuleiten, aber diese Kühlung genügt nicht bei Lichtprojektoren mit Ausstrahlung von Licht hoher Intensität. Ein solches Licht hoher Intensität führt unter Umständen auch dazu, daß die Bedienung des Lichtprojektors stark geblendet oder sogar ein Augenschaden verursacht wird. Solche Augenschäden können durch eine Ausführung nach der DE-A-27 41 714 (Figur 4) vermieden werden, aber die Bedienung muß dabei die Abblendung des Lichts gesondert bedienen, was leicht vergessen oder übersehen wird.

Die Aufgabe der Erfindung besteht darin, bei Lichtprojektoren sehr hoher Lichtleistung mit einer Anschlußbuchse für den Stecker eines Fiberlichtleitkabels beliebigen Querschnitts einen Hitzestau im Bereich des stirnseitigen Lichteintritts in den Stecker zu vermeiden. Diese Aufgabe wird bei einem Lichtprojektor der eingangs erwähnten Art dadurch gelöst, daß die in einem Ringlager montierte Anschlußbuchse durch begrenzte Verdrehung eine Blende aus dem Strahlengang des Lichtprojektors herausschwenkt und einen eingeführten Kabelstecker aufnimmt, der an seinem im Durchmesser verringerten proximalen Ende von mehreren, vorteilhaft drei metallischen Kühlbacken in Form von Zylinderringsegmenten radial nach innen abgefedert anliegend umfaßt ist, die durch eine gegen Schultern der Kühlbacken zur Anlage kommende Abstufung eines dickeren Steckerteiles gegen eine Federung in einen axialen Abstand von der Anschlußbuchse und dessen Ringlager drückbar sind.

Durch diese Lösung wird eine sichere Anlage der Kühlbacken gegen den Umfang des im Durchmesser verringerten, der Strahlungshitze besonders ausgesetzten Steckerteiles und damit eine einwandfreie Kühlung und Wärmeableitung ohne wesentlichen Wärmeübergang zum Ringlager und der Anschlußbuchse erreicht. Vorteilhaft werden die Kühlbacken mit radialen, Wärme an die Umgebung abgebenden Kühlblechen versehen, und zusätzlich werden die proximalseitige Lichteintrittsfläche des Steckers und auch die Kühlbacken selbst durch einen gerichteten Kühlstrahl gekühlt. Durch die Weiterbildung nach Anspruch 6 wird eine Lichtabgabe des Projektors erst dann möglich, wenn der Stecker des Fiberlichtleitkabels voll in die Anschlußbuchse eingeführt ist, womit die Abblendung des Lichts automatisch unabhängig von einer besonderen Bedienung erfolgt. Dabei wird vorteilhaft so vorgegangen, daß die Anschlußbuchse einen Mitnehmer besitzt, der beim Verdrehen der Buchse einen auf der Welle befestigten Schwenkhebel mitnimmt und die Welle dadurch die Blende aus dem Lichtstrahl des Projektors herausschwenkt, wobei es jedoch erforderlich ist, daß dieser Vorgang erst ausgelöst werden kann, wenn der Stecker vollständig in die Anschlußbuchse eingeführt und axial gesichert ist. Es bleibt also die Blende im Strahlengang und kann nur durch eine Verdrehung der mit dem eingeführten Stecker versehenen Anschlußbuchse in eine axial gesicherte Stellung aus dem Strahlengang herausgeschwenkt werden.

Die Erfindung wird nachstehend anhand der Zeichnung erläutert. Es zeigen :

Figur 1 einen Achsschnitt der Anschlußbuchse mit Kühlbacken für den im Durchmesser verringerten Steckerteil eines Fiberlichtleitkabels,

Figur 1a einen vergrößerten Achsschnitt der Anschlußbuchse mit Ringlager der Fig. 1,

Figur 1b einen vergrößerten Achsschnitt der in Fig. 1 dargestellten Kühlbacken,

Figur 2 eine Stirnansicht gegen die Kühlbacken, gesehen von einer Linie, die zwischen der Anschlußbuchse mit Ringlager und den Kühlbacken verläuft, ohne den in die Kühlbacken eingeführten Steckerteil,

Figur 3 die der Fig. 2 entsprechende Stirnansicht jedoch mit in die Kühlbacken einge-

führten, im Durchmesser verringerten Steckerteil,

Figur 4 einen Schnitt nach Linie A bis B der Fig. 1 ohne in die Buchse eingeführten Lichtleitstecker,

Figur 5 den der Fig. 4 gleichen Schnitt, jedoch mit teilweise eingeführtem Lichtleitstecker,

Figur 6 den der Fig. 4 gleichen Schnitt, jedoch mit vollständig eingeführtem Lichtleitstecker, aber ohne Verriegelung und ohne Freigabe des Strahlenganges des Lichtprojektors.

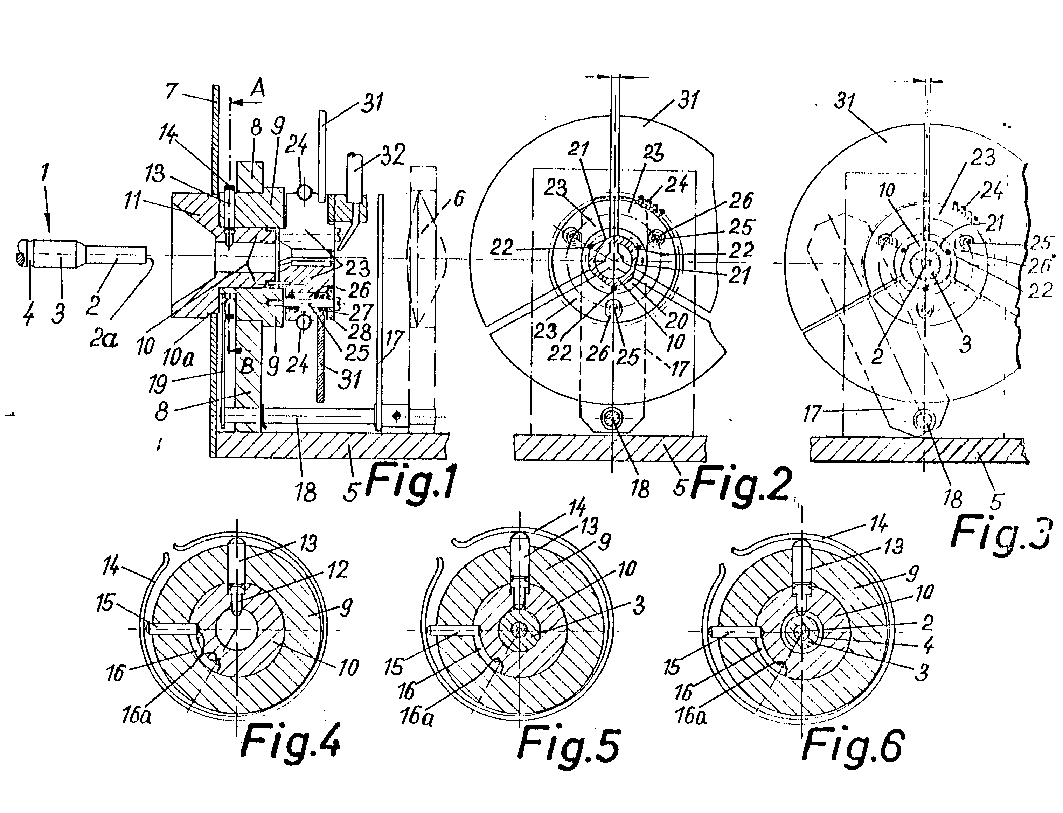

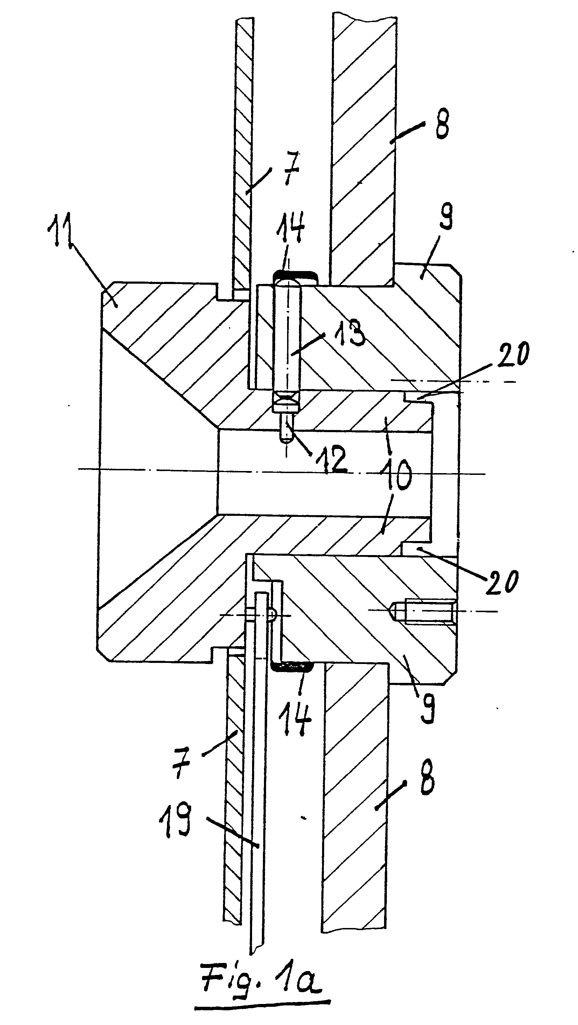

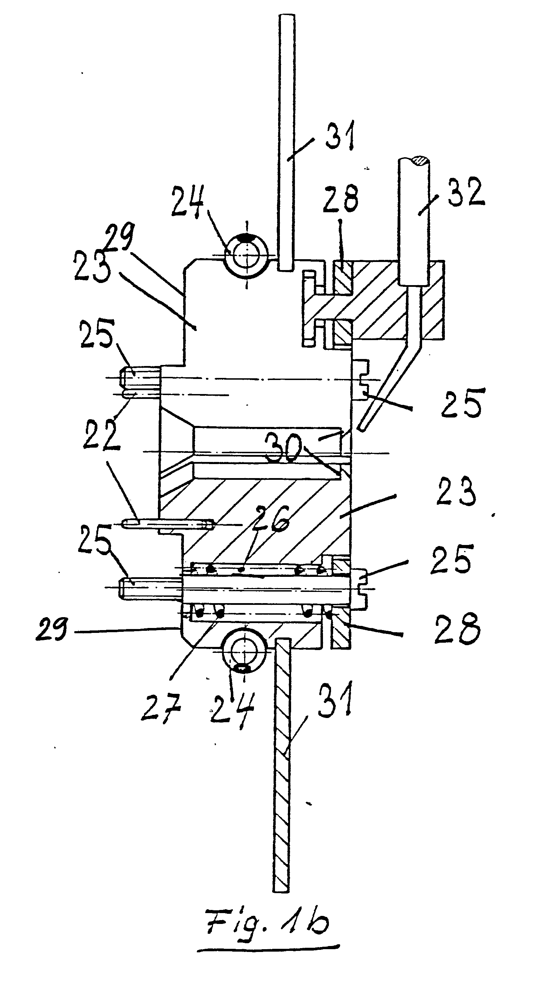

Nach Fig. 1 ist ein Fiberlichtleitkabel am proximalen, einem Lichtprojektor zugekehrten Ende mit einem Stecker 1 versehen, der am Ende als im Durchmesser verringerter Steckerteil 2 ausgebildet ist und in dessen Stirnfläche 2a das Licht eines Projektors eingestrahlt wird. Der Steckerteil 2 geht über eine Stufe in einen Teil 3 größeren Durchmessers über, der mit einer in der Bedeutung noch zu beschreibenden Ringnut 4 versehen ist. Mindestens im Bereich des Steckerteils 2 bzw. 2a sind die Fiber durch einen Glaskitt fest miteinander verbunden.

Von einem Lichtprojektor hoher Lichtleistung mit einer eine Anschlußbuchse und das Kondensorsystem aufnehmenden Trägerplatte 5 ist das Kondensorsystem mit 6 angedeutet. Der Aufbau von Lichtprojektoren ist allgemein bekannt und daher nicht im einzelnen dargestellt.

Hinter der Frontplatte 7 des Lichtprojektors ist in einem Träger 8 ein Ringlager 9 festgelegt, in welchem eine Anschlußbuchse 10 mit vor der Frontplatte liegendem Handhabering 11 begrenzt verdrehbar gelagert ist.

In Radialbohrungen des Lagers 9 und der Buchse 10 wird ein aus zwei Teilen 12 und 13 bestehender Sperrstift gelagert, der durch eine äußere umgebende Feder 14 radial nach innen unter Spannung steht und bei in die Buchse 10 eingeführtem Stecker 1 in dessen Ringnut 4 axial sperrend eingreift. Beim Einführen des Steckers 1 wird der die Buchse 10 gegen Verdrehung sperrende Stift 12, 13 aus der Stellung nach Fig. 1 und 4 durch den im Durchmesser erweiterten Steckerteil 3 in die Lage nach Fig. 5 verschoben, in der die Buchse 10 immer noch gegen eine Verdrehung im Ringlager 9 gesperrt ist, bis der Stiftteil 12 in die Ringnut 4 des Steckers 1 eingreifen kann, wie in Fig. 6 dargestellt ist. In dieser Stellung liegt die Unterteilung des Sperrstiftes 12, 13 genau auf dem Umfang der Buchse 10, so daß diese nun erst durch die Handhabe 11 verdreht werden kann. Die einseitige Verdrehung ist dadurch begrenzt, daß ein Radialstift 15 des Ringlagers 9 in eine Umfangsnut 16 der Buchse 10 eingreift und die jeweilige Endstellung durch Gefühlsrasten 16a angezeigt wird, wobei der durch die Ringfeder 14 in radialer Richtung vorgespannte Stift 15 in Vertiefungen eingreift.

In der Sperrlage der Buchse 10 (Fig. 1, 4 und 5) befindet sich im Strahlengang des Projektors eine an sich bekannte Blende 17, die fest auf einer verdrehbaren Welle 18 sitzt. Diese Welle 18 ist mit einem Hebelarm 19 verbunden, der bei Verdrehung der Buchse 10 durch einen Anschlag 10a aus der Stellung der Fig. 6 mitgenommen wird und dadurch über die Welle 18 die Blende 17 aus dem Strahlengang des Projektors herausschwenkt, was also nur möglich ist, wenn der Stecker 1 vollständig in die Buchse 10 eingeführt ist.

Die Anschlußbuchse 10 ist an ihrem Ende mit einer äußeren Umfangsabstufung 20 versehen (Fig. 1 und 1a), deren Umfang drei Abflachungen 21 aufweist (Fig. 2 und 3). In die Abstufung 20 greifen die einen Enden achsparalleler Zapfen 22, die ohne eingeführten Stecker 1 gegen den Abstufungsumfang 20 liegen (Fig. 2). Die anderen Enden der Zapfen 22 sind unbeweglich in Axialbohrungen dreier Kühlbacken 23 festgelegt, die zwischen sich bei nicht eingeführtem Stecker 1 einen ersten Abstand voneinander besitzen, wie die Fig. 2 zeigt, und die durch eine um den Umfang verlaufende Zugfeder 24 radial nach innen belastet sind. Diese Kühlbacken 23 liegen in der Ausgangsstellung nach Fig. 1 und 2 mit ihrer der Buchse 10 zugekehrten Fläche gegen das Ringlager 9, und diese Lage wird durch achsparallele Schrauben 25 erreicht, deren Ende in das Ringlager 9 eingeschraubt sind und mit Spiel achsparallele Bohrungen 26 der Kühlbacken 23 durchlaufen. Die Schrauben 25 sind von einer Druckfeder 27 umgeben, die sich einerseits gegen eine von den Schrauben durchgriffene Ringscheibe 28 und andererseits gegen eine ringförmige Schulter 29 der Kühlbacken 23 abstützen (siehe Fig. 1 und 1a) und damit die Anlage der Kühlbacken 23 gegen die Stirnfläche des Ringlagers 9 bewirken.

Wenn der Stecker 1 durch die Buchse 10 eingeführt wird, gelangt der im Durchmesser verringerte Steckerteil 2 in den Raum innen zwischen den Kühlbacken 23, während der Steckerteil 3 den Raum in der Buchse 10 ausfüllt. Die Kühlbacken 23 besitzen am dem Kondensorsystem 6 zugekehrten Ende eine nach innen gerichtete Ringschulter 30 geringer Höhe, gegen die die Stirnfläche 2a des Steckers 1 beim Einführen in die Buchse 10 und zwischen die Kühlbacken 23 zur Anlage kommt und damit die Kühlbacken 23 um eine bestimmte Länge axial gegen die Abfederung 27 verschiebt, bis der Sperrstift 12, 13 in die Ringnut 4 der Steckerfassung 3 eingreift. Dadurch wird ein Abstand zwischen den Kühlbacken 23 und der Stirnseite des Ringlagers 9 geschaffen, der einen direkten Wärmeübergang zwischen diesen Teilen 23 und 9, 10 verhindert. In dieser teilweise aufgehobenen ersten Sperrlage der Kühlbacken kann die Buchse 10, wie zu Fig. 1 und Fig. 4-6 beschrieben wurde, durch die Handhabe 11 in eine zweite Sperrlage verdreht werden, womit der Stecker 1 in der Buchse 10 festgesetzt ist, die Blende 17 aus dem Stahlengang des Projektors herausgeschwenkt und das Licht über die Stirnfläche 2a in das Fiberlichtleitkabel gestrahlt wird. Gleichzeitig gelangen bei dieser Verdrehung die achsparallelen Zapfen 22 in den Bereich der Abflachungen 21 der Buchsenabstufung 20, und damit können die Kühlbacken 23 durch die radial gerichtete Wirkung der Zugfeder 24 und die axiale Zentrierung durch den Steckerteil 2 mit ihren inneren Flächenteilen vollständig gegen den Umfang des Steckerteiles 2 zur Anlage gebracht werden, so daß die Kühlbacken (23) in der Lage sind, die sich besonders in diesem Steckerteil durch das eingestrahlte Licht hoher Intensität entwickelnde Hitze wirksam abzuführen, was dadurch begünstigt wird, daß die Kühlbacken 23 mit äußeren radial gerichteten Kühlblechen 31 versehen sind, und auch dadurch, daß die Stirnfläche 2a des Steckerteils 2 und die angrenzenden Flächenteile der Kühlbacken 23 von einem Kühlluftstrom einer Kühlluftzuführung 32 angeblasen werden. Gleichzeitig nehmen die Kühlbacken 23, um eine flächenförmige Anlage an den Steckerteil 2 zu gewährleisten, einen zweiten geringen Abstand voneinander ein. Längenabweichungen der Steckerteile 2, 3 können durch axiale Verschiebung der Buchse 10 ausgeglichen werden.

**Patentansprüche**

1. Lichtprojektor mit einer Anschlußbuchse (10) eines in sie einführbaren Steckers (1) eines Fiberlichtleitkabels, dessen dem Projektor zugekehrt proximales Steckerende im Durchmesser verringert und von einem Wärmeableiter umgeben ist, dadurch gekennzeichnet, daß die in einem Ringlager (9) montierte Anschlußbuchse (10) des Lichtprojektors durch begrenzte Verdrehung eine Blende (17) aus dem Strahlengang des Lichtprojektors herausschwenkt und einen eingeführten Kabelstecker (1) aufnimmt, der an seinem proximalen Ende (2) von mehreren ; vorteilhaft drei metallischen Kühlbacken (23) in Form von Zylinderringsegmenten radial nach innen abgefedert anliegend umfaßt ist, die durch eine gegen Schultern der Kühlbacken (23) zur Anlage kommende Abstufung des dickeren Steckerteiles (3) gegen eine Federung (27) in einen axialen Abstand von der Anschlußbuchse (10) und dessen Ringlager (9) drückbar sind.

2. Lichtprojektor nach Anspruch 1, dadurch gekennzeichnet, daß jede Kühlbacke (23) mit einem sich radial nach außen erstreckenden Kühlblech (31) versehen ist.

3. Lichtprojektor nach Anspruch 1 oder 2, dadurch gekennzeichnet, daß den Kühlbacken (23) eine von Toleranzen und Formabweichungen unabhängige, gegen diese und die Stirnfläche (2a) des Fiberlichtleitsteckers (1) gerichtete Kühlluftzuführung (32) zugeordnet ist.

4. Lichtprojektor nach einem der Ansprüche 1 bis 3, dadurch gekennzeichnet, daß die Sicherung des in die Anschlußbuchse (10) eingeführten Kabelsteckers (1) aus einem im Ringlager (9) und der Buchse (10) gelagerten, zweiteiligen, radial nach innen abgefederten Stift (12, 13) besteht, der mit dem inneren Stiftteil (12) in eine Ringnut (4) des in die Buchse (10) eingeführten Steckers (1) eingreift, und daß in dieser Stellung die Trennstelle des zweiteiligen Stiftes (12, 13) mit dem äußeren Umfang der Anschlußbuchse (10) fluchtet, wobei eine begrenzte Verdrehung der Anschlußbuchse (10) vorgesehen ist.

5. Lichtprojektor nach Anspruch 4, dadurch gekennzeichnet, daß die Verdrehung der Anschlußbuchse (10) im Ringlager (9) durch einen im Ringlager radial geführten, mit dem inneren Ende in eine begrenzte Umfangsnut (16) der Buchse (10) eingreifenden Stift begrenzt ist und für die Endlagen der Anschlußbuchse (10) der Stift (15) in Rasten eingreift.

6. Lichtprojektor nach Anspruch 4 oder 5, dadurch gekennzeichnet, daß die Anschlußbuchse (10) einen Mitnehmer (10a) besitzt, der beim begrenzten Verdrehen der Buchse (10) einen auf einer achsparallelen Welle (18) befestigten Schwenkhebel (19) mitnimmt und die Welle dabei eine auf ihr befestigte Blende aus dem Lichtstrahl des Projektors herausschwenkt.

7. Lichtprojektor nach einem der Ansprüche 1 bis 6, dadurch gekennzeichnet, daß das dem Kondensorsystem (6) zugekehrte und mit Umfangsabflachungen (21) versehene Ende (20) der Anschlußbuchse (10) am Außenumfang in der Dicke abgestuft ist und daß in diese vom Ringlager (9) umfaßte Abstufung (20) die Enden von Mitnehmerstiften (22) eingreifen, deren andere Enden in achsparallelen Bohrungen der durch eine umgreifende Zugfeder (24) in radialer Richtung zusammengehaltenen Kühlbacken (23) festgelegt sind, die axial durch Druckfedern (27) in Richtung gegen die Stirnflächen des Ringlagers (9) vorgespannt sind.

8. Lichtprojektor nach einem der Ansprüche 1 bis 7, dadurch gekennzeichnet, daß achsparallele Schrauben (25) Bohrungen (26) der Kühlbacken (23) mit Spiel durchgreifen und mit einem Ende in das Ringlager (9) der Buchse (10) schraubbar sind und daß die Schrauben (25) eine mit den Kühlbacken (23) verbundene Ringscheibe (28) durchgreifen, die als Widerlager für das eine Ende je einer die Schrauben (25) umgebenden Druckfeder (27) dient, deren anderes Widerlager aus einer die Bohrungen (26) abschließenden Ringschulter (29) der Kühlbacken (23) besteht.

**Claims**

1. Light projector comprising a connector sleeve (10) for a plug (1) insertible therein, of a fibre light ductor cable whose plug extremity at the proximal side facing towards the projector is reduced in diameter and surrounded by a heat dissipator, characterised in that the connector sleeve (10) of the light projector, which is installed in a ring bearing (9), by limited pivotal displacement pivots a shutter (17) out of the beam path of the light projector and receives an inserted cable plug (1) which is enflanked at its proximal extremity (2) by several and advantageously three metal cooling jaws (23) in the form of cylinder ring segments in radially inwardly sprung manner, which may be thrust, by means of a step of the thicker plug section (3) bearing against shoulders of the cooling jaws (23) against a spring (27) at an axial distance from the connector sleeve (10) and its ring bearing (9).

2. Light projector according to claim 1, characterised in that each cooling jaw (23) is provided with a radially outwardly extending cooling plate (31).

3. Light projector according to claim 1 or 2, characterised in that a cooling air feed (32) directed against the cooling jaws (23) and the end face (2a) of the fibre light ductor plug (1) and unaffected by tolerances and deviations from shape, is allocated to said cooling jaws.

4. Light projector according to one of the claims 1 to 3, characterised in that the securing means for the cable plug (1) inserted into the connector sleeve (10) comprise a radially inwardly sprung two-piece pin (12, 13) installed in the ring bearing (9) and the sleeve (10), which engages with the inner pin portion (12) in an annular groove (4) of the plug (1) inserted into the sleeve (10), and that in this position, the dividing point of the two-piece pin (12, 13) is aligned with the outer periphery of the connector sleeve (10), provision being made for a limited pivotal displacement of the connector sleeve.

5. Light projector according to claim 4, characterised in that the pivotal displacement of the connector sleeve (10) in the ring bearing (9) is limited by a pin radially guided in the ring bearing and engaging with the inner extremity in a limited peripheral groove (16) of the sleeve (10) and that the pin (15) engages in detent means for the terminal positions of the connector sleeve (10).

6. Light projector according to claim 4 or 5, characterised in that the connector sleeve (10) has an engaging element (10a) which during limited pivotal displacement of the sleeve (10) entrains a rocking lever (19) secured on an axially parallel spindle (18), and the spindle at the same time outwardly pivots a shutter fastened on it out of the light beam of the projector.

7. Light projector according to one of the claims 1 to 6, characterised in that the extremity (20) of the connector sleeve (10) facing towards the condenser system (6) and provided with peripheral flats (21) is stepped in thickness at the outer periphery and that this step (20) enflanked by the ring bearing (9) has engaged in it the extremities of engaging pins (22) whose other extremities are immobilised in axially parallel bores of the cooling jaws (23) held together in the radial direction by an enflanking tension spring (24), which are axially preloaded by compression springs (27) in the direction towards the end faces of the ring bearing (9).

8. Light projector according to one of the claims 1 to 7, characterised in that axially parallel screws (25) traverse bores (26) of the cooling jaws (23) with a clearance and may have one extremity screwed into the ring bearing (9) of the sleeve (10), and in that the screws (25) pass through an annular plate (28) connected to the cooling jaws (23) which acts as a stop for the one extremity of one of the compression springs (27), each surrounding one of the screws (25), whose other end stop consists of an annular shoulder (29) of the cooling jaws (23) terminating the bores (26).

## Revendications

1. Projecteur de lumière comportant une boîte de raccordement (10) pour un embout enfichable (1) d'un câble à fibres optiques, dont l'extrémité orientée en regard du projecteur présente un diamètre réduit, et se trouve entourée par un élément servant à évacuer la chaleur, caractérisé en ce que la boîte de raccordement (10) du projecteur de lumière montée dans un palier annulaire (9) peut effectuer un mouvement de rotation limitée, pour faire pivoter un obturateur (17) et l'écarter hors du trajet du faisceau lumineux du projecteur, cette boîte de raccordement (10) pouvant recevoir l'embout enfichable (1) monté sur le câble, dont l'extrémité (2) enfoncée dans la boîte s'y trouve entourée par plusieurs mâchoires métalliques de refroidissement (23), de préférence au nombre de trois, qui constituent les segments d'une bague cylindrique et sont appliquées élastiquement vers l'intérieur contre l'extrémité précitée (2) ; ces mâchoires de refroidissement (23) pouvant être enfoncées par la partie de plus fort calibre (3) de l'embout enfichable (1), dont un épaulement est adapté à venir en appui contre des épaulements correspondants des mâchoires de refroidissement (23), à l'encontre d'un système de ressorts (27) qui sont excentrés par rapport à l'axe de la boîte de raccordement (10) et de son palier annulaire (9).

2. Projecteur de lumière selon la revendication 1, caractérisé en ce que chacune des mâchoires de refroidissement (23) est pourvue d'une plaque de refroidissement en tôle (31), qui s'étend radialement vers l'extérieur.

3. Projecteur de lumière selon l'une des revendications 1 ou 2, caractérisé en ce qu'une canalisation d'arrivée d'air de refroidissement (32) est associée aux mâchoires de refroidissement (23), indépendamment des tolérances et variations de forme de celles-ci, et débouche en regard de ces mâchoires de refroidissement (23) et de la face frontale (2a) de l'embout enfichable (1) du câble à fibres optiques.

4. Projecteur de lumière selon l'une quelconque des revendications 1 à 3, caractérisé en ce que le verrouillage de sécurité de l'embout enfichable (1) du câble, enfoncé en position de service dans la boîte de raccordement (10), est assuré par un doigt (12, 13) en deux parties, monté radialement dans le palier annulaire (9) et dans le corps de la boîte de raccordement (10), ce doigt de verrouillage (12, 13) étant sollicité vers l'intérieur par un ressort, et comportant une partie interne (12) adaptée à s'engager·dans une gorge annulaire (4) de l'embout enfichable (1) enfoncé en position de service dans la boîte de raccordement (10), la zone de séparation des deux parties (12, 13) du doigt de verrouillage venant affleurer dans la position précitée au niveau de la surface périphérique de la boîte de raccordement (10), de manière à permettre un mouvement de rotation limité de la boîte de raccordement (10).

5. Projecteur de lumière selon la revendication 4, caractérisé en ce que le mouvement de rotation de la boîte de raccordement (10) dans son palier annulaire (9) est limité par un doigt d'arrêt (15), monté radialement dans le palier annulaire, et dont l'extrémité interne est engagée dans une gorge périphérique d'extension limitée (16) ménagée sur la boîte de raccordement (10), ce doigt d'arrêt (15) venant élastiquement en prise dans des cuvettes de retenue de la gorge précitée, dans les positions angulaires de la boîte de raccordement (10) qui correspondent au débattement maximum de cette boîte.

6. Projecteur de lumière selon l'une des revendications 4 ou 5, caractérisé en ce que la boîte de raccordement (10) porte un organe de commande (10a), adapté à entraîner un levier pivotant (19) sous l'effet d'un mouvement de rotation limité de la boîte (10), ce levier pivotant (19) étant monté sur un arbre de liaison (18) parallèle à l'axe du système, qui porte un obturateur (17) et commande le pivotement de cet obturateur, pour l'écarter hors du trajet du faisceau lumineux du projecteur.

7. Projecteur de lumière selon l'une quelconque des revendications 1 à 6, caractérisé en ce que l'extrémité (20) de la boîte de raccordement (10) disposée en regard du système condenseur de lumière (6) est pourvue de méplats périphériques (21) et étagée en épaisseur à la périphérie et en ce que les extrémités d'une broche de commande (22) sont insérées dans l'épaulement (20) entouré d'un palier annulaire (9), les autres extrémités de la broche étant ancrées dans un trou, parallèle à l'axe, de l'une des mâchoires de refroidissement (23) qui sont maintenues ensemble et sollicitées radialement par un ressort de traction (24) qui les entoure, alors que des ressorts de compression (27) sollicitent les mâchoires de refroidissement (23) dans le sens axial, pour les appliquer contre la face frontale du palier annulaire (9).

8. Projecteur de lumière selon l'une quelconque des revendications 1 à 7, caractérisé en ce qu'il comporte des vis (25) parallèles à l'axe du système et qui passent avec du jeu dans des alésages (26) des mâchoires de refroidissement (23), ces vis (25) ayant chacune leur extrémité adaptée à se visser dans le palier annulaire (9) de la boîte de raccordement (10), et en ce que les vis (25) traversent une couronne (28) associée aux mâchoires de refroidissement (23), la couronne (28) servant de butée pour celle des extrémités de chaque ressort de compression (27) entourant les vis (25), l'autre butée étant constituée d'un épaulement annulaire (29) des mâchoires de refroidissement (23) lequel ferme les trous (26).

Fig.1

Fig.2

Fig.3

Fig.4

Fig.5

Fig.6

0 105 951

Fig. 1a

2

Fig. 1b